Europäisches Patentamt

(19) European Patent Office

Office européen des brevets

(11) Numéro de publication: **0 133 120**
**B1**

(12) **FASCICULE DE BREVET EUROPEEN**

(45) Date de publication du fascicule du brevet:
30.03.88

(21) Numéro de dépôt: **84401542.0**

(22) Date de dépôt: **20.07.84**

(51) Int. Cl.⁴: **G 01 B 11/02**

(54) **Dispositif de mesure de la dimension bord à bord d'un objet par voie optique.**

(30) Priorité: **26.07.83 FR 8312328**

(43) Date de publication de la demande:
**13.02.85 Bulletin 85/7**

(45) Mention de la délivrance du brevet:
**30.03.88 Bulletin 88/13**

(84) Etats contractants désignés:
**DE GB**

(56) Documents cités:
**US - A - 3 937 580**

**IBM TECHNICAL DISCLOSURE BULLETIN, vol. 20, no. 1, juin 1977, pages 206-214, New York, USA; R.S. CHARSKY et al.: "Advanced diffraction pattern analysis algorithm"**

(73) Titulaire: **Guillaume, Michel, Les Blétières - Les Adrets, F-38190 Brignoud (FR)**
Titulaire: **Noailly, Nicole, 61, Boulevard Joseph Vallier, F-38100 Grenoble (FR)**

(72) Inventeur: **Guillaume, Michel, Les Blétières - Les Adrets, F-38190 Brignoud (FR)**
Inventeur: **Noailly, Nicole, 61, Boulevard Joseph Vallier, F-38100 Grenoble (FR)**

(74) Mandataire: **Mongrédien, André et al, c/o BREVATOME 25, rue de Ponthieu, F-75008 Paris (FR)**

ACTORUM AG

## Description

La présente invention concerne un dispositif de mesure de la dimension bord à bord d'un objet par voie optique. Cette dimension peut être une épaisseur, une largeur, un diamètre, etc. l'invention s'applique en particulier à des objets de faible dimension, par exemple de quelques μm ou moins.

L'invention peut s'appliquer, entre autres, à la mesure de la largeur d'un motif déposé ou gravé sur un substrat plan. Plus particulièrement, l'invention peut être utilisée pour effectuer la mesure précise et juste de la largeur d'un trait déposé sur un substrat semiconducteur, ce trait pouvant servir de motif test destiné à contrôler et régler le processus de fabrication d'un circuit intégré. L'invention permet la mesure de motifs de dimension suffisamment faible pour qu'elle s'applique à une technologie de fabrication de circuits intégrés microniques et même submicroniques.

Il existe des dispositifs de mesure des dimensions d'objets faisant quelques μm. Ces dispositifs fonctionnent suivant le principe d'un système optique genre microscope dans lequel on forme une image agrandie de l'objet. Un opérateur effectue directement la mesure à partir de cette image. Mais cette mesure est imprécise, car les contours de l'objet sont mal définis et l'opérateur doit évaluer subjectivement la position des ces contours. La mesure varie donc d'un opérateur à l'autre.

Il existe aussi des dispositifs utilisant des éléments photosensibles (par exemple des caméras vidéo) disposés dans le plan de l'image agrandie de l'objet. Ces éléments photosensibles fournissent des signaux électriques, qui peuvent être interprétés automatiquement en vue de fournir une mesure de l'objet.

Ces dispositifs sont plus précis que les précédents, car ils ne font pas intervenir l'appréciation humaine, toujours source d'aléas. En revanche leur justesse reste médiocre. En effet, comme les contours de l'image sont mals définis, il n'est pas possible de connaître exactement ce que mesure le dispositif photosensible. Un calibrage soigné permet d'obtenir des résultats satisfaisants seulement si les objets ont une taille supérieure à deux μm.

Il existe également des dispositifs mettant en œuvre le calcul de la transformation de Fourier du signal de diffraction de l'objet soumis à la mesure. Une telle technique est décrite par exemple dans US-A 3 937 580. Pour améliorer la précision et la justesse des mesures dans le domaine micronique, la tendance actuelle consiste à perfectionner les organes optiques pour augmenter leur qualité (suppression des aberrations en tous genres). Ainsi, l'image optique étant de meilleure qualité, son interprétation s'en trouve facilitée.

La présente invention concerne un ensemble de moyens constituant un nouveau dispositif de mesure de dimension par voie optique, qui permet d'améliorer à la fois la précision et la justesse de la mesure, pour des objets mesurés aussi petits et même plus petits que ceux qui peuvent être mesurés actuellement. En outre, ce résultat est obtenu avec des moyens optiques et électroniques de qualité usuelle.

Ce but est atteint, selon l'invention, grâce à l'utilisation de moyens permettant de passer du domaine spatial, qui est celui de l'image de l'objet à mesurer, à un domaine de fréquence, obtenu par transformée de Fourier discrète. La mesure de la dimension s'effectue alors dans ce domaine transformé, ce qui conduit à de multiples avantages comme on le comprendra mieux par la suite.

La transformation de Fourier discrète d'un signal est, naturellement, une opération connue en soi et qui a déjà trouvé de multiples applications. On pourra consulter par exemple à ce sujet l'ouvrage de J. LIFERMANN intitulé «Les méthodes rapides de transformation du signal: Fourier, Walsh, Hadamard, Haar» (Masson 1979), chapitre III.

De façon précise, l'invention a pour objet un dispositif de mesure de la dimension bord à bord d'un objet, ce dispositif comprenant un moyen optique de formation d'une image agrandie de cet objet dans un plan image, cette image faisant apparaître de façon distincte les deux bords de l'objet, un organe photosensible constitué d'une suite d'éléments photosensibles disposés dans le plan image et orientés selon une direction perpendiculaire aux bords de l'image, cet organe photosensible fournissant une série de signaux électriques analogiques ayant une amplitude fonction de l'intensité lumineuse reçue par chacun des divers éléments qui le constituent, ce dispositif étant caractérisé par le fait qu'il comprend, en outre, un convertisseur analogique-numérique ayant une entrée reliée à la sorte de l'organe photosensible et une sortie qui délivre une série de signaux numériques, et un circuit de traitement numérique relié à la sortie du convertisseur et effectuant une transformation de Fourier discrète du signal formé par cette série de signaux numériques, transformation qui conduit à une distribution de composantes de Fourier qui comprend des minima écartés de la valeur N, dont un premier minimum à la valeur N, le circuit de traitement étant apte à déterminer la valeur N et à déduire de cette valeur N la dimension L recherchée par la relation L=X/N où X est un paramètre défini par les conditions opératoires.

Dans une première variante, le circuit de traitement détermine la position du premier minimum, ce qui fournit la valeur N. Cette variante correspond à des cas simples où les images sont contrastées, ce qui est le cas des mesures effectuées sur des masques. Dans une seconde variante, le circuit de traitement détermine la valeur moyenne de l'écart entre les minima successifs rencontrés dans le spectre. Cette variante correspond aux mesures effectuées sur des images fortement affectées par des effets d'interférences optiques (motifs gravés sur des plaquettes).

Les caractéristiques de l'invention apparaîtront mieux après la description qui suit, d'exemples de réalisation donnés à titre explicatif et nullement limitatif. Cette description se réfère à des dessins annexés sur lesquels:

- la figure 1 est une vue en coupe d'un motif théorique rencontré en microéléctronique,
- la figure 2 est une vue en coupe d'un motif réel,
- la figure 3 est une vue en perspective du motif de la figure 2,
- la figure 4 représente l'image de l'objet des figures 2 et 3 telle qu'obtenue avec un microscope optique,
- les figures 5 et 6 illustrent deux diagrammes que l'on peut rencontrer lors de l'analyse de deux motifs différents,
- la figure 7 est un schéma du dispositif de l'invention,
- la figure 8 montre un spectre discret (module de la Transformée de Fourier Discrète) du signal correspondant aux diagrammes des figures 5 ou 6,
- les figures 9a et 9b montrent deux exemples expérimentaux de diagrammes de mesure des dimensions d'un objet,
- les figures 10a et 10b montrent les deux transformées de Fourier discrètes, correspondant aux deux diagrammes des figures 9a et 9b.

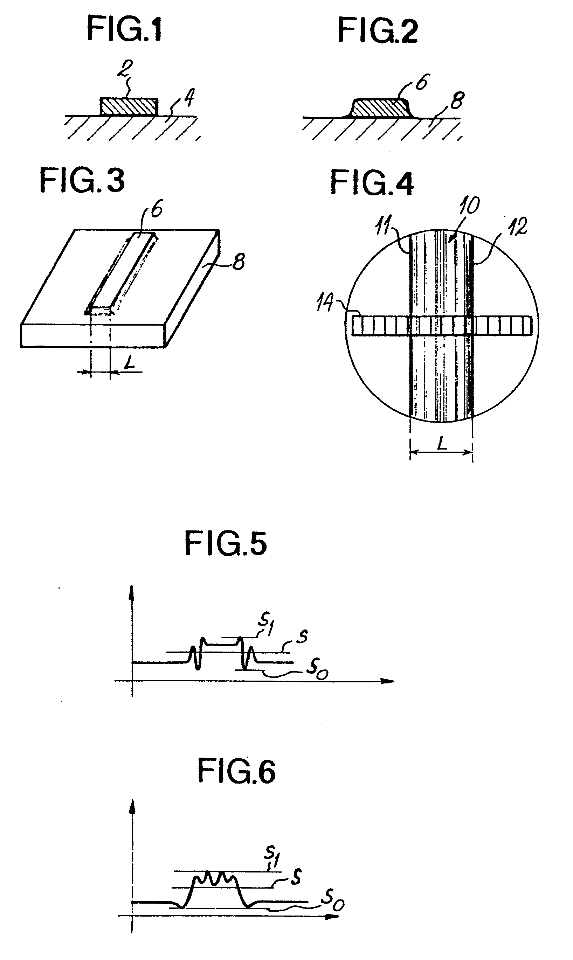

L'objet représenté sur la figure 1 est un objet théorique. Il s'agit d'un motif 2 (par exemple une couche métallique, ou isolante ou semiconductrice) parfaitement parallélépipédique, disposé sur un substrat 4 (par exemple en isolant, ou en matériau semicronducteur). En pratique, de tels objets ont une forme comme celle qui est représentée sur les figures 2 et 3. Le profil 6 déposé sur le substrat 8 possède des bords arrondis et, examiné au microscope, il donne une image 10 avec des bords 11 et 12 mal définis (figure 4). Cette imprécision est due tant à la complexité géométrique des bords réels de l'objet qu'à l'imperfection de l'optique du microscope.

Si l'on dispose, en travers de l'image 10, c'est-à-dire selon une direction perpendiculaire aux bords de l'image, un organe photosensible 14, formé d'une barrette d'éléments photosensibles et si l'on extrait séquentiellement les signaux issus de chacun de ces éléments, on obtient un signal analogique dont l'enveloppe a une forme telle que celles qui sont représentées sur les figures 5 et 6. Il est clair qu'il est difficile d'exploiter de tels diagrammes pour en extraire la largeur de l'objet. Les effets de diffraction, d'aberration géométrique et chromatique, ainsi que divers effets électroniques parasites du système d'acquisition, perturbent le signal et sont la cause de la complexité des diagrammes obtenus. Pour les exploiter malgré tout, le principe de la mesure classique consiste à choisir expérimentalement un seuil S, compris entre les niveaux minimal $S_0$ et maximal $S_1$ du signal électrique, et à mesurer la largeur du signal au niveau de ce seuil.

On comprend immédiatement qu'il est difficile de savoir ce que l'on mesure exactement de cette manière, même si l'on obtient des résultats répétitifs et précis. En outre, si l'on a affaire à des objets transparents (comme c'est parfois le cas en microélectronique), l'image obtenue est peu contrastée et comporte des effets d'interférences, ce qui rend la mesure encore plus délicate.

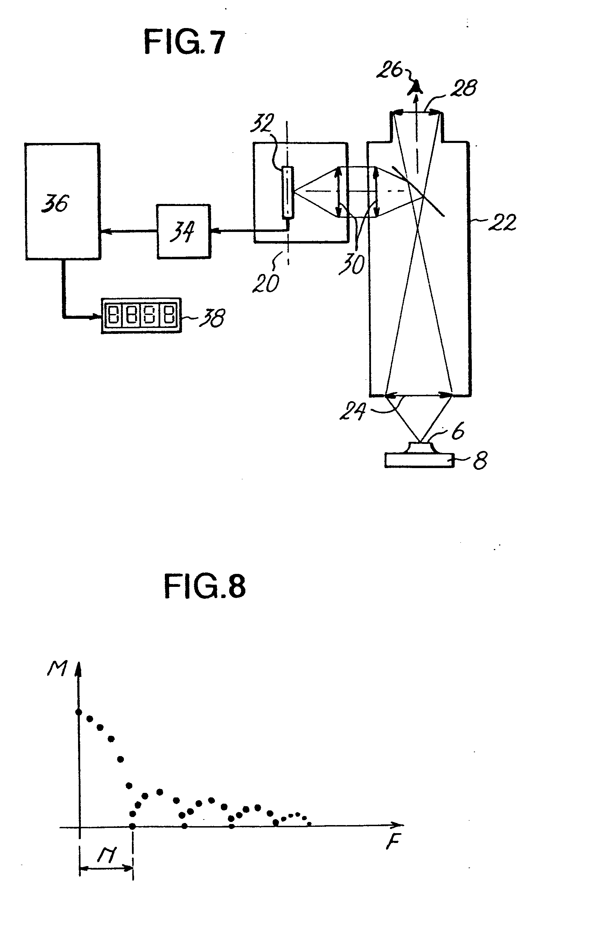

L'invention remédie à ces inconvénients grâce à une disposition qui est illustrée sur la figure 7. Le dispositif représenté comprend, tout d'abord, des moyens optiques classiques permettant de former une image de l'objet 6 dans un plan image 20. Ces moyens comprennent un microscope optique 22 constitué d'une première optique 24 permettant d'obtenir une image réelle agrandie, que l'on peut observer directement en 26 devant un oculaire 28 et d'une seconde optique 30, permettant d'agrandir cette image dans le plan 20. Dans ce plan 20, est disposée perpendiculairement à la direction générale du trait, une barrette 32 constituée d'un ensemble d'éléments photosensibles alignés et juxtaposés. On peut utiliser à cette fin des éléments photoconducteurs associés à un dispositif à couplage de charge («Charge Coupled Device» ou CCD en anglais).

Selon l'invention, le dispositif comprend, en outre, un convertisseur analogique-numérique 34 qui convertit en signaux numériques les signaux analogiques provenant des éléments photosensibles. Les signaux numériques sont transmis à un circuit 36 de traitement numérique. Ce dispositif 36 est connu en soi et permet de réaliser une opération de Transformée de Fourier Discrète (en abrégé TFD), (le caractére «discret» de cette transformée venant du fait que le signal à transformer n'est pas continu mais est échantillonné).

Le signal délivré par un circuit de TFD est représenté sur la figure 8. Il s'agit d'une succession de points dont l'ordonnée M correspond au module de la fonction complexe résultant de la transformation de Fourier. La fréquence F portée en abscisses est naturellement une fréquence spatiale. Selon les propriétés connues de la transformation de Fourier, le spectre obtenu contient une suite de minima. Le rôle du circuit de traitement 36 est également de rechercher la position du premier minimum ou la valeur moyenne des écarts entre les minima, position ou valeur désignées par N. Un raisonnement mathématique connu permet d'affirmer la possibilité de déduire, à partir de cette valeur «N», la longueur du signal électrique, donc la largeur «L» de l'image. On a en effet L=X/N où X est un paramètre qui est défini par les conditions opératoires. Un calibrage du dispositif, effectué à l'aide d'un objet de largeur connue, permet d'affecter une valeur «X» à la partie du dispositif photosensible qui effectue l'acquisition électrique de l'image. Le résultat final de la mesure est affiché sur un écran 38.

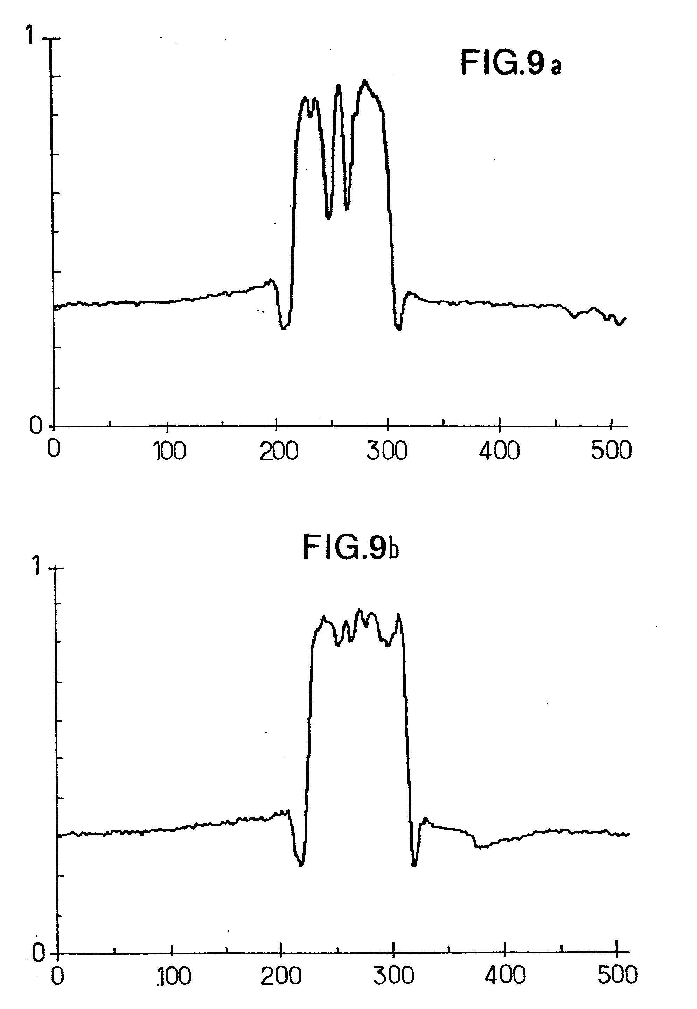

Les diagrammes des figures 9a et 9b montrent deux exemples de relevés expérimentaux du signal analogique disponible à la sortie de l'organe photosensible 32. Ces deux diagrammes correspondent à un même objet mais dans des conditions d'analyse différentes. On constate que les deux diagrammes sont sensiblement différents.

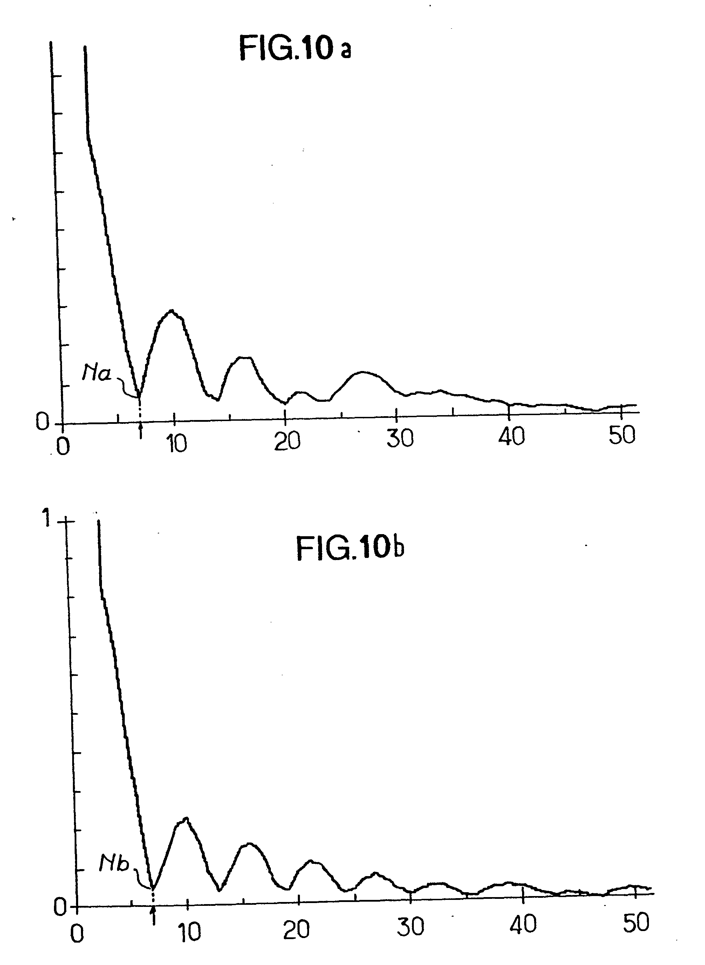

Les figures 10 a et 10b représentent les transformées de Fourier correspondant aux deux profils 9a et 9b. On voit que les deux valeurs Na et Nb, marquant la position des premiers minima de ces spectres, sont identiques pour les deux cas. On s'est donc affranchi largement des conditions opératoires.

**Revendications**

1. Dispositif de mesure de la dimension bord à bord d'un objet (6), comprenant des moyens optiques (24, 30) de formation d'une image agrandie de cet objet dans un plan image (20), cette image faisant apparaître de façon distincte les deux bords de l'objet (6), un organe photosensible (32) constitué d'une suite d'éléments photosensibles disposés dans le plan image (20) et orientés selon une direction perpendiculaire aux bords de l'image, cet organe photosensible (32) fournissant une série de signaux électriques analogiques ayant une amplitude fonction de l'intensité lumineuse reçue par chacun des divers éléments qui le constituent, ce dispositif étant caractérisé par le fait qu'il comprend, en outre, un convertisseur analogique-numérique (34) ayant une entrée reliée la sortie de l'organe photosensible (32) et une sortie qui délivre une série de signaux numériques, et un circuit de traitement numérique (36) relié à la sortie du convertisseur (34) et effectuant une transformation de Fourier discrète du signal formé par cette série de signaux numériques, transformation qui conduit à une distribution de composantes de Fourier qui comprend des minima écartés de le valeur N, dont un premier minimum à la valeur N, le circuit de traitement (36) étant apte à déterminer la valeur N et à déduire de cette valeur N la dimension L recherchée par la relation L=X/N où X est un paramètre défini par les conditions opératoires.

2. Dispositif selon la revendication 1, caractérisé par le fait que le circuit de traitement (36) détermine la position du premier minimum.

3. Dispositif selon la revendication 1, caractérisé par le fait que le circuit de traitement (36) détermine la valeur moyenne des écarts entre les minima successifs.

**Claims**

1. Device for measuring the edge to edge dimension of an object (6), the device incorporating optical means (24, 30) forming a magnified image of said object in an image plane (20), said image clearly and distinctly showing the two edges of the object (6), a photosensitive member (32) constituted by a sequence of photosensitive elements arranged in the image plane (20) and oriented in a direction perpendicular to the edges of the image, said photosensitive member (32) supplying a series of analog electrical signals, having an amplitude which is a function of the light intensity received by each of the various elements constituting the same, characterized in that the device also comprises an analog – digital converter (34) having an input connected to the output of the photosensitive member (32) and an output supplying a series of digital signals, as well as a digital processing circuit (36), connected to the output of the converter (34) and performing a discrete Fourier transformation of the signal formed by said series of digital signals, said transformation leading to a distribution of Fourier components comprising minima spaced by the value N, whereof a first minimum has the value N, the processing circuit (36) being able to determine the value N and deduce from said value N the sought dimension L by the relation L=X/N, in which X is a parameter defined by the operating conditions.

2. Device according to claim 1, characterized in that the processing circuit (36) determines the position of the first minimum.

3. Device according to claim 1, characterized in that the processing circuit (36) determines the mean value of the variations between successive minima.

**Patentansprüche**

1. Messvorrichtung für die Dimension zwischen zwei Kanten eines Gegenstands (6) mit optischen Mitteln (24, 30) zur Erzeugung eines vergrösserten Bilds dieses Gegenstands in einer Bildebene (20), wobei dieses Bild in unterscheidbarer Weise die zwei Ränder des Gegenstands (6) sichtbar werden lässt, einem strahlungsempfindlichen Organ (32), welches von einer Reihe strahlungsempfindlicher Elemente gebildet ist, die in der Bildebene (20) angeordnet und längs einer zu den Rändern des Bilds senkrechten Richtung ausgerichtet sind, wobei dieses strahlungsempfindliche Organ (32) eine Reihe von elektrischen Analogsignalen mit einer Amplitude liefert, die eine Funktion der von jedem der verschiedenen Elemente empfangenen Lichtintensität ist, die das Organ bilden, wobei diese Vorrichtung dadurch gekennzeichnet ist, dass sie ferner einen Analog-Digital-Umwandler (34), der einen mit dem Ausgang des strahlungsempfindlichen Organs (32) verbundenen Eingang und einen eine Reihe von Digitalsignalen abgebenden Ausgang aufweist, und einen digitalen Verarbeitungsschaltkreis (36) umfasst, der mit dem Ausgang des Umwandlers (34) verbunden ist und eine diskrete Fourier-Transformation des von dieser Reihe von Digitalsignalen gebildeten Signals durchführt, wobei die Transformation zu einer Verteilung von Fourier-Komponenten führt, die Minima im Abstand des Werts N umfasst, unter denen ein erstes Minimum bei dem Wert N liegt, wobei durch den Verarbeitungsschaltkreis (36) der Wert N bestimmbar und von diesem Wert N die gesuchte Dimension L durch die Beziehung L=X/N ableitbar ist, in der X ein durch die Betriebsbedingungen festgelegter Parameter ist.

2. Vorrichtung nach Anspruch 1, dadurch gekennzeichnet, dass der Verarbeitungsschaltkreis (36) die Lage des ersten Minimums bestimmt.

3. Vorrichtung nach Anspruch 1, dadurch gekennzeichnet, dass der Verarbeitungsschaltkreis (36) den Mittelwert der Abstände zwischen den aufeinanderfolgenden Minima bestimmt.

# FIG.1

# FIG.2

# FIG.3

# FIG.4

# FIG.5

# FIG.6

## FIG.7

## FIG.8

FIG.9 a

FIG.9 b

# FIG.10 a

*Na*

0   10   20   30   40   50

# FIG.10 b

1

*Nb*

0

0   10   20   30   40   50